# EUROPÄISCHE PATENTSCHRIFT

(11) **EP 3 112 770 B1**
(45) Veröffentlichungstag und Bekanntmachung des Hinweises auf die Patenterteilung: **16.05.2018**
(21) Anmeldenummer: 16176532.6
(22) Anmeldetag: 28.06.2016
(51) Int. Cl.: F24F 11/00, G05B 15/02, G06Q 10/06, G06Q 50/06, H04L 12/28, G05D 23/19

(54) **VERFAHREN, KLIMATISIERUNGSEINRICHTUNG UND SYSTEM**
METHOD, AIR CONDITIONING DEVICE AND SYSTEM
PROCÉDÉ, DISPOSITIF DE CLIMATISATION ET SYSTÈME

(30) Priorität: 03.07.2015 DE 102015212543
(43) Veröffentlichungstag der Anmeldung: 04.01.2017
(73) Patentinhaber: ROBERT BOSCH GMBH, 70442 Stuttgart (DE)
(72) Erfinder: Erkel, Steffen, 35638 Leun (DE); Zambrano Garcia, Andres Alejandro, 35390 Giessen (DE)

(56) Entgegenhaltungen:
- US-A1- 2008 306 632
- US-A1- 2014 074 300
- US-A1- 2015 168 964
- US-B1- 6 241 155

## Beschreibung

Die Erfindung betrifft ein Verfahren gemäß Patentanspruch 1, eine Klimatisierungseinrichtung gemäß Patentanspruch 13 und ein System gemäß Patentanspruch 14.

### Stand der Technik

Es sind Systeme aufweisend einen Zentralrechner und eine Heizungsanlage bekannt, wobei die Heizungsanlage mittels Internet mit dem Zentralrechner verbunden ist. Die US 2014/074300 A1 beschreibt ein Kontrollsystem für eine Klimatisierungseinrichtung, bei dem Leistungsparameter über eine Zeitspanne gesammelt werden und daraus ein statistisches Modell ermittelt wird.

### Offenbarung der Erfindung

Es ist Aufgabe der Erfindung ein verbessertes Verfahren und ein verbessertes System bereitzustellen.

Diese Aufgabe wird mittels eines Verfahrens gemäß Patentanspruch 1, mittels einer Klimatisierungseinrichtung gemäß Patentanspruch 13 und mittels eines Systems gemäß Patentanspruch 14 gelöst. Vorteilhafte Ausführungsformen sind in den abhängigen Ansprüchen angegeben.

Es wurde erkannt, dass ein verbessertes Verfahren, eine verbesserte Klimatisierungseinrichtung und ein verbessertes System dadurch bereit gestellt werden kann, dass in einem ersten Verfahrensschritt für ein erstes Zeitintervall wenigstens ein Wert eines Leistungsparameters einer Klimatisierungseinrichtung des Systems ermittelt wird, wobei in einem zweiten Verfahrensschritt für das erste Zeitintervall eine zeitabhängige erste Lastkennlinie ermittelt wird, wobei in einem dritten Verfahrensschritt ein erstes Ähnlichkeitsmaß zumindest abschnittsweise der ersten Lastkennlinie mit einem vordefinierten Lastprofil ermittelt wird, wobei in einem vierten Verfahrensschritt das ermittelte erste Ähnlichkeitsmaß mit einem vordefinierten Schwellenwert verglichen wird, wobei in einem fünften Verfahrensschritt ein erster Bereich, in dem das erste Ähnlichkeitsmaß geringer ist als der vordefinierte Schwellenwert ermittelt wird, wobei in einem sechsten Verfahrensschritt auf Grundlage des ersten Bereichs ein erstes Lastprofil ermittelt wird, wobei auf Grundlage des ersten Lastprofils ein Steuersignal zur Steuerung der Klimatisierungseinrichtung ermittelt wird.

In einer weiteren Ausführungsform wird im ersten Verfahrensschritt ein Wert des Leistungsparameters der Klimatisierungseinrichtung in einem zweiten Zeitintervall ermittelt, wobei im zweiten Verfahrensschritt für das zweite Zeitintervall eine zweite zeitabhängige Lastkennlinie ermittelt wird, wobei in dritten Verfahrensschritt ein zweites Ähnlichkeitsmaß zumindest abschnittsweise der zweiten Lastkennlinie mit dem vordefinierten Lastprofil ermittelt wird, wobei in einem vierten Verfahrensschritt das ermittelte zweite Ähnlichkeitsmaß mit dem vordefinierten Schwellenwert verglichen wird, wobei in einem fünften Verfahrensschritt ein zweiter Bereich, in dem das zweite Ähnlichkeitsmaß geringer ist als der vordefinierte Schwellenwert, ermittelt wird, wobei das erste Lastprofil auf Grundlage einer Mittelung des ersten Bereichs und des zweiten Bereichs ermittelt wird.

In einer weiteren Ausführungsform wird als vordefiniertes Lastprofil die zweite Lastkennlinie gewählt.

In einer weiteren Ausführungsform wird in einem siebten Verfahrensschritt das vordefinierte Lastprofil durch das ermittelte erste Lastprofil ersetzt.

In einer weiteren Ausführungsform wird in einem achten Verfahrensschritt zusätzlich eine Abweichung zwischen dem vordefinierten Lastprofil und dem ermittelten Lastprofil ermittelt, wobei die Abweichung mit einem vordefinierten weiteren Schwellenwert verglichen wird, wobei bei Überschreiten des weiteren Schwellenwerts der dritte bis siebte Verfahrensschritt wiederholt werden.

In einer weiteren Ausführungsform wird für eine weitere Klimatisierungseinrichtung ein zweites Lastprofil ermittelt, wobei ein drittes Ähnlichkeitsmaß zumindest abschnittsweise zwischen dem neuen ersten Lastprofil und dem zweiten Lastprofil ermittelt wird, wobei das dritte Ähnlichkeitsmaß mit einem vordefinierten Gruppenschwellenwert in einem Vergleich verglichen wird, wobei in Abhängigkeit des Ergebnisses des Vergleichs die zum ersten Lastprofil zugeordnete Klimatisierungseinrichtung und die zum zweiten Lastprofil zugeordnete Klimatisierungseinrichtung einer gemeinsamen Nutzergruppe oder unterschiedlichen Nutzergruppen zugeordnet werden.

In einer weiteren Ausführungsform wobei bei Unterschreiten des Gruppenschwellenwerts durch das dritte Ähnlichkeitsmaß ein dritter Bereich des ersten Lastprofils, in dem das dritte Ähnlichkeitsmaß geringer ist, und ein vierter Bereich des zweiten Lastprofils, in dem das dritte Ähnlichkeitsmaß geringer ist, ermittelt werden, auf Grundlage des dritten Bereichs und des vierten Bereichs ein zu einem Nutzerprofil zugeordnetes Gruppenlastprofil ermittelt wird.

In einer weiteren Ausführungsform wird das Gruppenlastprofil auf Grundlage einer Mittelung des dritten Bereichs und des vierten Bereichs ermittelt.

In einer weiteren Ausführungsform wird bei Überschreiten des Gruppenschwellenwerts durch das dritte Ähnlichkeitsmaß auf Grundlage des ersten Lastprofils ein zu einer Nutzergruppe zugeordnetes Gruppenlastprofil ermittelt und auf Grundlage des zweiten Lastprofils ein zu einer weiteren Nutzergruppe zugeordnetes weiteres Gruppenlastprofil ermittelt.

In einer weiteren Ausführungsform wird das erste Lastprofil mit dem Gruppenlastprofil verglichen, wobei in Abhängigkeit eines Ergebnisses des Vergleichs das Steuersignal zur Steuerung einer Komponente der Klimatisierungseinrichtung ermittelt wird.

In einer weiteren Ausführungsform wird das Gruppenlastprofil mit einem vordefinierten Normallastprofil verglichen in einem Vergleich, wobei in Abhängigkeit des Ergebnisses des Vergleichs ein weiteres Steuersignal zur Steuerung der Klimatisierungseinrichtung ermittelt wird.

In einer weiteren Ausführungsform wird wenigstens eines der Ähnlichkeitsmaße mittels eines Dynamic-Time-Warping (DTW)-Algorithmus ermittelt.

In einer weiteren Ausführungsform wird das erste Lastprofil mit dem ersten Gruppenlastprofil verglichen, wobei in Abhängigkeit eines Ergebnisses des Vergleichs ein Steuersignal zur Steuerung einer Komponente der Klimatisierungseinrichtung ermittelt wird.

In einer weiteren Ausführungsform wird das Gruppenlastprofil mit einem vordefinierten Normallastprofil in einem Vergleich verglichen wird, wobei in Abhängigkeit des Ergebnisses des Vergleichs ein weiteres Steuersignal zur Steuerung der Klimatisierungseinrichtung ermittelt wird.

Nachfolgend wird die Erfindung anhand von Figuren näher erläutert. Dabei zeigen:
Figur 1 eine schematische Ansicht eines Systems;
Figur 2 ein Ablaufdiagramm eines Verfahrens zum Betrieb des in Figur 1 gezeigten Systems;
Figuren 3 und 4 ein Diagramm des Leistungsparameters aufgetragen über der Zeit;
Figur 5 ein Diagramm einer ersten Lastkennlinie und eines vordefinierten ersten Lastprofils;
Figur 6 ein Diagramm der ersten Lastkennlinie und einer zweiten Lastkennlinie und eines neu ermittelten ersten Lastprofils;
Figur 7 ein Diagramm des ersten werktäglichen Lastprofils und eines ersten wochenendlichen Lastprofils der ersten Klimatisierungseinrichtung;
Figur 8 ein Ablaufdiagramm eines Gruppierungsverfahrens zum Betrieb des in Figur 1 gezeigten Systems;
Figur 9 ein Ablaufdiagramm eines Verfahrens zur Steuerung wenigstens einer Klimatisierungsanlagen des Systems;
Figur 10 eine Weiterbildung des in den Figuren 1 bis 8 beschriebenen Systems; und
Figur 11 ein Ablaufdiagramm eines Verfahrens zur Eingruppierung der neu zu installierendeinstallierenden Klimatisierungseinrichtung in das System.

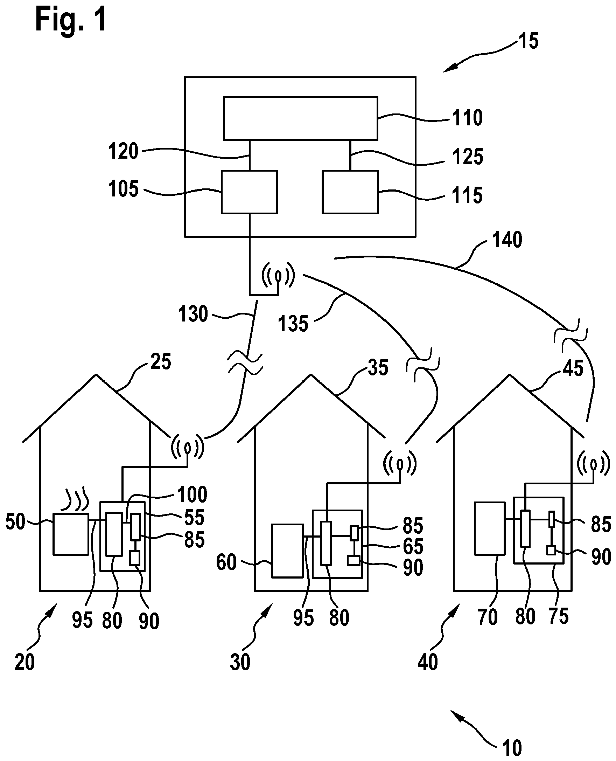

Figur 1 zeigt eine schematische Darstellung eines Systems 10. Das System 10 umfasst einen Zentralrechner 15, eine erste Klimatisierungseinrichtung 20 (bestehend z.B. aus Wärme-/Kälteerzeuger, Steuergerät und anlagenbedingter Hydraulik), die in einem ersten Gebäude 25 angeordnet ist, beispielhaft eine zweite Klimatisierungseinrichtung 30, die in einem zweiten Gebäude 35 angeordnet ist, und eine dritte Klimatisierungseinrichtung 40, die in einem dritten Gebäude 45 angeordnet ist.

Die Klimatisierungseinrichtung 20, 30, 40 dient jeweils dazu, das Gebäude 25, 35, 45, zu klimatisieren, insbesondere zu heizen und/oder zu kühlen. Auch kann die Klimatisierungseinrichtung 20, 30, 40 ausgebildet sein, mehrere der Gebäude 25, 35, 45 oder nur einen Teil des Gebäudes 25, 35, 45 zu klimatisieren. Auch können für das Gebäude 25, 35, 45 jeweils mehrere Klimatisierungseinrichtungen 20, 30, 40 vorgesehen sein.

Die erste Klimatisierungseinrichtung 20 umfasst eine erste Klimatisierungsvorrichtung 50 und ein erstes Steuergerät 55. Die zweite Klimatisierungseinrichtung 30 umfasst eine zweite Klimatisierungsvorrichtung 60 und ein zweites Steuergerät 65. Die dritte Klimatisierungseinrichtung 40 umfasst eine dritte Klimatisierungsvorrichtung 70 und ein drittes Steuergerät 75. In der Ausführungsform sind beispielhaft die erste, zweite und dritte Klimatisierungsvorrichtung 50, 60, 70 identisch. Auch können die erste und/oder zweite und/oder dritte Klimatisierungsvorrichtung 50, 60, 70 unterschiedlich ausgebildet sein. Die Klimatisierungsvorrichtung 50, 60, 70 kann beispielsweise als Wärmepumpe, Ölbrenner, Gasbrenner, Pelletbrenner, thermisches Solarmodul oder andersartig ausgebildet sein. So kann beispielsweise die erste Klimatisierungsvorrichtung 50 als Ölbrenner, die zweite Klimatisierungsvorrichtung 60 als Gasbrenner und die dritte Klimatisierungsvorrichtung 70 als Wärmepumpe ausgebildet sein. Auch kann die Klimatisierungsvorrichtung 50, 60, 70 mehrere Energiequellen nutzen.

In der Ausführungsform sind beispielhaft das erste Steuergerät 55, das zweite Steuergerät 65 und das dritte Steuergerät 75 identisch ausgebildet. Auch können die Steuergeräte 55, 65, 75 unterschiedlich zueinander ausgebildet sein. Das Steuergerät 55, 65, 75 weist vorzugsweise eine Steuergerätschnittstelle 80, eine Steuereinrichtung 85 und einen Steuerspeicher 90 auf. Die Steuergerätschnittstelle 80 ist jeweils über eine erste Verbindung 95 mit der zum Steuergerät 55, 65, 75 zugeordneten Klimatisierungsvorrichtung 50, 60, 70 verbunden. Über eine zweite Verbindung 100 ist die Steuergerätschnittstelle 80 mit der Steuereinrichtung 85 verbunden.

Im Steuerspeicher 90 können beispielsweise ein Steueralgorithmus und/oder eine Steuerkennlinie und/oder ein Steuerprogramm und/oder eine Kennlinie abgelegt sein, auf dessen Grundlage die Steuereinrichtung 85 ein Steuersignal zur Steuerung der Klimatisierungsvorrichtung 50, 60, 70 ermittelt. Das Steuersignal wird von der Steuereinrichtung 85 über die zweite Verbindung 100 an die Steuergerätschnittstelle 80 übertragen. Von der Steuergerätschnittstelle 80 wird das Steuersignal an die jeweils zum Steuergerät 55, 65, 75 zugeordnete Klimatisierungsvorrichtung 50, 60, 70 weitergeleitet. Auf Grundlage des Steuersignals wird die Klimatisierungsvorrichtung 50, 60, 70 betrieben und beispielsweise aktiviert und/oder deaktiviert und/oder eine Leistung der Klimatisierungsvorrichtung 50, 60, 70 gesteuert.

Der Zentralrechner 15 umfasst eine Zentralschnittstelle 105, eine Zentralrecheneinrichtung 110 und einen Zentralspeicher 115. Die Zentralschnittstelle 105 ist über eine dritte Verbindung 120 mit der Zentralrecheneinrichtung 110 verbunden. Der Zentralspeicher 115 ist über eine vierte Verbindung 125 mit der Zentralrecheneinrichtung 110 verbunden.

Im Zentralspeicher 115 sind vorzugsweise ein erster Schwellenwert, ein zweiter Schwellenwert, ein erster und ein zweiter Gruppenschwellenwert abgelegt. Ferner können im Zentralspeicher 115 weitere Daten, insbesondere Datensätze, und/oder weitere Schwellenwerte und/oder Steuerparameter und/oder wenigstens ein Algorithmus abgelegt sein. Des Weiteren kann im Zentralspeicher 115 ein Algorithmus zur Steuerung der Klimatisierungseinrichtungen 20, 30, 40 abgelegt sein.

Die Zentralschnittstelle 105 ist über eine fünfte Verbindung 130 mit der Steuergerätschnittstelle 80 des ersten Steuergeräts 55 verbunden. Über eine sechste Verbindung 135 ist die Zentralschnittstelle 105 mit der Steuergerätschnittstelle 80 des zweiten Steuergeräts 65 verbunden. Über eine siebte Verbindung 140 ist die Zentralschnittstelle 105 mit der Steuergerätschnittstelle 80 des dritten Steuergeräts 75 verbunden. Ferner können weitere Verbindungen vorgesehen sein, mit denen die Zentralschnittstelle 105 mit weiteren Steuergerätschnittstellen 80 weiterer Steuergeräte weiterer Klimatisierungseinrichtungen, die in Figur 1 nicht dargestellt sind, verbunden ist. Insbesondere ist die Anzahl von Verbindungen 130, 135, 140, mit denen die Zentralschnittstelle 105 mit weiteren Steuergerätschnittstellen 80 von Steuergeräten 55, 65, 75 verbunden ist, nicht limitiert. Auch kann die Anzahl geringer sein als in Figur 1 gezeigt. Die fünfte, sechste und siebte Verbindung 130, 135, 140 sind beispielhaft drahtlos ausgebildet. Auch können diese kabelgeführt und/oder abschnittsweise drahtlos oder kabelgeführt ausgebildet sein.

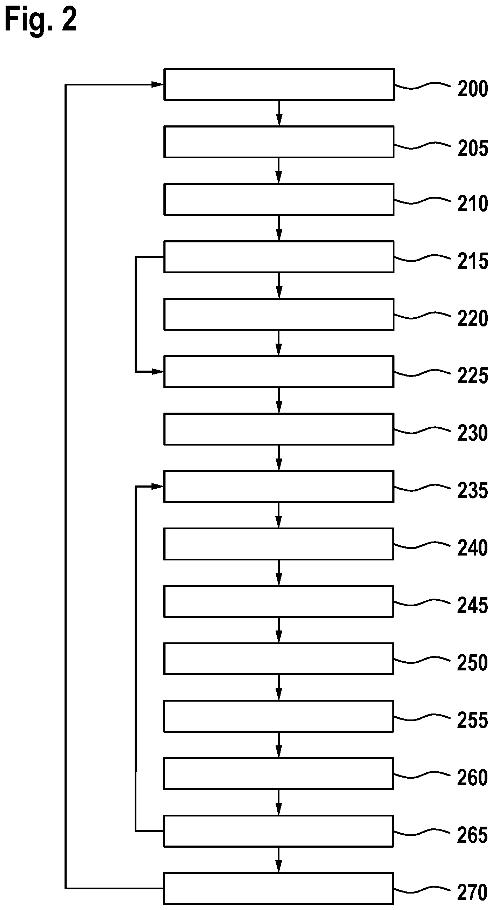

Figur 2 zeigt ein Ablaufdiagramm eines Verfahrens zum Betrieb des in Figur 1 gezeigten Systems 10.

Im Betrieb der Klimatisierungseinrichtung 20, 30, 40 wird die Klimatisierungsvorrichtung 50, 60, 70 auf Grundlage wenigstens eines Leistungsparameters gesteuert. Dabei kann der Leistungsparameter beispielsweise eine Brennstoffzufuhr oder eine benötigte elektrische Leistung der Klimatisierungsvorrichtung 50, 60, 70 sein. Auch kann der Leistungsparameter eine Messgröße sein, die mittels eines in der Klimatisierungsvorrichtung 50, 60, 70 angeordneten Sensors (nicht dargestellt) erfasst wird. Dies kann beispielsweise eine Ausgangstemperatur eines von der Klimatisierungsvorrichtung 50, 60, 70 erwärmten Wärmeträgermediums sein. Auch kann der Leistungsparameter ein Verhältnis sein, beispielsweise ein Verhältnis aus abgegebener Leistung der Klimatisierungsvorrichtung 50, 60, 70 und einer Maximalleistung der Klimatisierungsvorrichtung.

Das im Folgenden beschriebe Verfahren zum Betrieb des in Figur 1 gezeigten Systems 10 wird anhand der ersten Klimatisierungseinrichtung 20 und des Zentralrechners 15 beispielhaft erläutert. Das Verfahren, wird auch für die weiteren Klimatisierungseinrichtungen 30, 40 wiederholt. Zur erleichterten Lesbarkeit wird in Figur 2 nur auf die erste Klimatisierungseinrichtung 20 eingegangen. Für die weiteren Klimatisierungseinrichtungen 30, 40 gilt das für die erste Klimatisierungseinrichtung 20 erläuterte Verfahren analog, sofern nichts anderes erläutert wird.

In einem ersten Verfahrensschritt 200 wird über einen Zeitraum 141, der sich vorzugsweise über mehrere Tage und/oder Wochen und/oder Monate erstreckt, aber in seiner Länge nicht limitiert ist, der Leistungsparameter der ersten Klimatisierungsvorrichtung 50 von der ersten Steuereinrichtung 85 der ersten Klimatisierungseinrichtung 20 ermittelt.

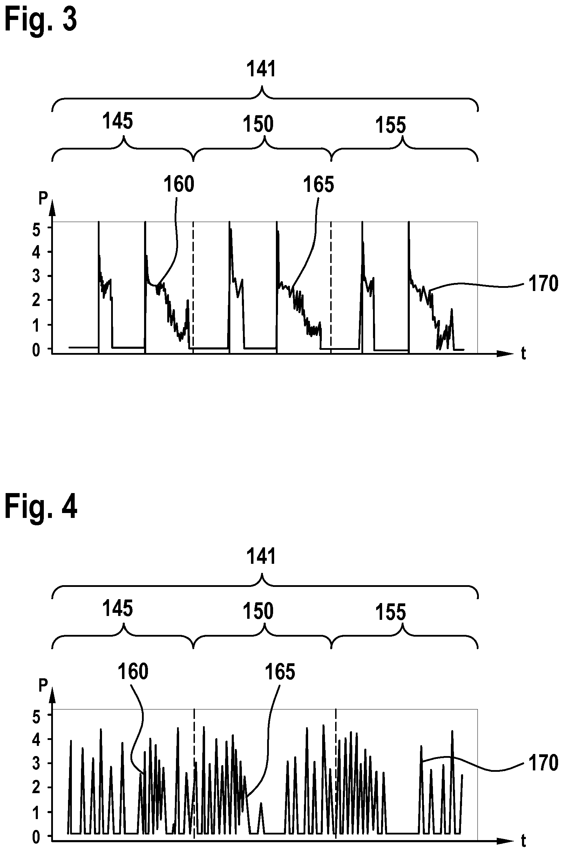

Figuren 3 und 4 zeigen ein Diagramm des Leistungsparameters P aufgetragen über die Zeit t. Dabei ist mit einer durchgezogenen Linie der Verlauf des Leistungsparameters P dargestellt. Der Wert des Leistungsparameters P ist zeitabhängig und vom Nutzerverhalten sowie klimatischen Einflüssen auf das erste Gebäude 25 abhängig und somit beispielhaft.

In einem zweiten Verfahrensschritt 205 wird der erfasste Leistungsparameter P im Steuerspeicher 90 des ersten Steuergeräts 55 zeitabhängig in einem für die erste Klimatisierungsvorrichtung 20 zugeordneten ersten Datensatz abgelegt. Dabei wird zu jedem erfassten Leistungsparameter ein Zeitstempel zusätzlich im Steuerspeicher 90 abgelegt.

Vorzugsweise wird beispielsweise der Leistungsparameter P als Wert für eine in einem, beispielsweise 15 Minuten langen, Erfassungszeitintervall benötige Leistung im ersten Datensatz abgelegt. Dies kann beispielsweise dadurch erfolgen, dass die Steuereinrichtung 85 zur Ermittlung des Werts des Leistungsparameters die Leistung der Klimatisierungsvorrichtung 50 über das Erfassungszeitintervall aufintegriert und das Ergebnis der Integration als Wert des Leistungsparameters mit dem Zeitstempel, beispielsweise 14:30 Uhr, ablegt. Dabei entspricht beispielsweise der abgelegte Wert für 14:30 Uhr der über den Zeitraum von 14:16 Uhr bis 14:30 Uhr abgegeben und/oder erbrachten Leistung der ersten Klimatisierungsvorrichtung 50. Auch kann das Erfassungszeitintervall länger oder kürzer ausgebildet sein. Auch kann der erfasste Wert des Leistungsparameters direkt zeitabhängig im ersten Datensatz abgelegt werden.

In einem dritten Verfahrensschritt 210 wird über die fünfte Verbindung 130 der erste Datensatz aus dem Steuerspeicher 90 des ersten Steuergeräts 55 an den Zentralrechner 15 übertragen. Im Zentralrechner 15 wird der erste Datensatz im Zentralspeicher 115 abgelegt.

In einem vierten Verfahrensschritt 215 überprüft die Zentralrecheneinrichtung 110 den ersten Datensatz der ersten Klimatisierungseinrichtung 20 auf Vollständigkeit, das heißt, dass in regelmäßigem zeitlichem Abstand ein Wert des Leistungsparameters im ersten Datensatz vorhanden ist. Ist dies nicht der Fall, fährt die Zentralrecheneinrichtung 110 mit einem fünften Verfahrensschritt 220 fort. Ist dies nicht der Fall, überspringt die Zentralrecheneinrichtung 110 den fünften Verfahrensschritt 220 und fährt mit einem sechsten Verfahrensschritt 225 fort.

Im fünften Verfahrensschritt 220 ergänzt die Zentralrecheneinrichtung 110 fehlende Werte des Leistungsparameters der ersten Klimatisierungsvorrichtung 50 mit plausiblen Werten. Dies kann beispielsweise dadurch erfolgen, indem mittels eines Data-Mining-Algorithmus die fehlenden Werte des Leistungsparameters generiert werden. Dies ist insbesondere bei kleineren fehlenden Zeitabschnitten innerhalb des Zeitraums 141 von Vorteil, da beispielsweise ein Ausfall des Steuergeräts 55 der ersten Klimatisierungsvorrichtung 20 die im Weiteren beschriebenen Verfahrensschritte nicht beeinflusst.

Im sechsten Verfahrensschritt 225 unterteilt die Zentralrecheneinrichtung 110 den Zeitraum 141, in einzelne, gleich lange Zeitintervalle 145, 150, 155. Dabei ist von besonderem Vorteil, wenn das Zeitintervall 145, 150, 155 beispielsweise 24 Stunden beträgt und/oder vorteilhafterweise um 0:00 Uhr eines Tages beginnt und um 24:00 Uhr eines Tages endet. Diese Aufteilung ist beispielhaft in Figur 3 mittels einer strichlierten Linie dargestellt. Dabei folgt beispielhaft auf ein erstes Zeitintervall 145 ein zweites Zeitintervall 150. Auf das zweite Zeitintervall 150 folgt ein drittes Zeitintervall 155. Auch kann zwischen den einzelnen Zeitintervallen 145, 150, 155 ein weiteres Zeitintervall sein, sodass die Zeitintervalle 145, 150, 155 zeitlich nicht direkt nicht aufeinanderfolgen.

Zusätzlich kann im Zentralspeicher 115 zu jeweils dem Zeitintervall 145, 150, 155 eine Information des Datums des Zeitintervalls 145, 150, 155 und/oder eine Information hinsichtlich eines Werktags und/oder eines Wochenendes, zugeordnet zu dem jeweiligen Zeitintervall 145, 150, 155, abgelegt sein.

In einem siebten Verfahrensschritt 230 ermittelt die Zentralrecheneinrichtung 110 für das erste Zeitintervall 145 eine zeitabhängige erste Lastkennlinie 160. Ferner ermittelt die Zentralrecheneinrichtung 110 für die weiteren ermittelten Zeitintervalle 150, 155 weitere zeitabhängige Lastkennlinien 165, 170. Die ermittelten Lastkennlinien 160, 165, 170 werden in einem ersten Lastkennliniensatz, der der ersten Klimatisierungseinrichtung 20 zugeordnet ist, im Zentralspeicher 115 abgelegt.

Die Lastkennlinie 160, 165, 170 kann dabei jeweils für das Zeitintervall 145, 150, 155, vorzugsweise durch eine Polynomisierung der zeitabhängigen Werte im Zeitintervall 145, 150, 155, ermittelt werden. Dabei ist von besonderem Vorteil, wenn die Lastkennlinie 160, 165, 170 wenigstens ein Polynom fünften Grades, vorteilhafterweise ein Polynom zehnten Grades, insbesondere wenigstens ein Polynom fünfundzwanzigsten Grades ist. Dabei ist von besonderem Vorteil, wenn das Polynom einen Grad aufweist, der geringer ist, als die Anzahl der Werte des Leistungsparameters im Zeitintervall 145, 150, 155.

In einem achten Verfahrensschritt 235 wählt die Zentralrecheneinrichtung 110 aus dem ersten Lastkennliniensatz eine Lastkennlinie als vordefiniertes Lastprofil aus. Dabei ist von Vorteil, wenn die als vordefinierte Lastprofil gewählte Lastkennlinie 160, 165, 170 nicht diejenige Lastkennlinie ist, beispielsweise die erste Lastkennlinie 160, mit der die Zentralrecheneinrichtung 110 beginnt. So ist beispielsweise von Vorteil, wenn als vordefiniertes Lastprofil für den ersten Lastkennliniensatz die zweite Lastkennlinie 165 oder die dritte Lastkennlinie 170 oder weitere Lastkennlinien gewählt wird.

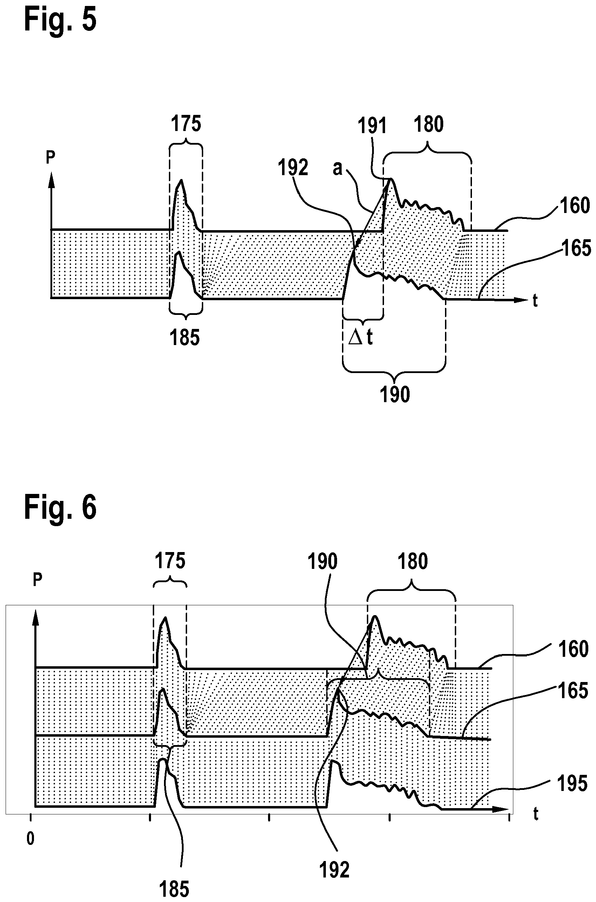

Figur 5 zeigt ein Diagramm der ersten Lastkennlinie 160 und der als vordefiniertes Lastprofil gewählten zweiten Lastkennlinie 165. Die Lastkennlinie 160 und das vordefinierte Lastprofil sind zeitlich synchronisiert dargestellt. Zur besseren Erkennbarkeit sind in Figur 5 die erste Lastkennlinie und das vordefinierte Lastprofil räumlich übereinander dargestellt.

Die erste Lastkennlinie 160 weist beispielhaft einen ersten Abschnitt 175 und einen zweiten Abschnitt 180 in denen die Werte größer Null sind auf. Im ersten und zweiten Abschnitt 175, 180 ist der Wert der ersten Lastkennlinie 160 größer null (d.h. hier wurde eine Last durch die Klimatisierungsvorrichtung 50 erbracht).

Das vordefinierte Lastprofil (in einem ersten Durchlauf des Verfahrens beispielhaft die zweite Lastkennlinie) weist beispielhaft einen dritten Abschnitt 185 und einen vierten Abschnitt 190 auf, in denen die Werte größer Null sind.

In einem neunten Verfahrensschritt 240 ermittelt die Zentralrecheneinrichtung 110 ein erstes Ähnlichkeitsmaß zwischen der ersten Lastkennlinie 160 und dem vordefinierten Lastprofil.

In Figur 5 kann der Betrachter augenscheinlich erkennen, dass zeitlich der erste Abschnitt 175 und der dritte Abschnitt 185 sowohl zu einem ähnlichen Zeitpunkt beginnen und auch zu einem ähnlichen Zeitpunkt enden. Ferner ist der Verlauf des ersten Abschnitts 175 und des dritten Abschnitts 185 über die Zeit augenscheinlich ähnlich.

Der zweite Abschnitt 180 und der vierte Abschnitt 190 sind ebenso ähnlich in ihrem Verlauf, jedoch beginnt der vierte Abschnitt 190 zeitlich vor dem zweiten Abschnitt 180 und endet zeitlich vor dem zweiten Abschnitt 180. Die zeitliche Dauer des zweiten Abschnitts 180 und des vierten Abschnitts 190 ist im Wesentlichen identisch. Somit weist der zweite Abschnitt 180 der ersten Lastkennlinie 160 einen Zeitversatz Δt zu dem vordefinierten Lastprofil auf.

Das (erste) Ähnlichkeitsmaß entspricht dabei einem minimierten Abstand a₁ zwischen einem Punkt, beispielsweise einem ersten lokalen Maximum 191 der ersten Lastkennlinie 160, und einem Punkt, beispielsweise dem zweiten lokalen Maximum 192 des vordefinierten Lastprofils.

Dabei können vorteilhafterweise das erste Ähnlichkeitsmaß mittels eines allgemein bekannten Dynamic-Time-Warping (DTW)-Algorithmus ermittelt werden. Der Dynamic-Time-Warping Algorithmus hat den Vorteil gegenüber anderen Algorithmen, dass der DTW-Algorithmus den Zeitversatz Δt zwischen zwei Abschnitten, in Figur 5 beispielhaft des zweiten und vierten Abschnitts 180, 190, berücksichtigt. Alternativ wäre auch ein k-Means-Algorithmus denkbar.

Dabei können zusätzlich durch die Zentralrecheneinrichtung 110 für den DTW-Algorithmus weitere (lokale und globale) Randbedingungen berücksichtigt werden. Besonders vorteilhaft ist hierbei, wenn die Zentralrecheneinrichtung 110 als Randbedingung beispielsweise ein allgemein als Sakoa-Shiba bezeichnetes Fenster einhält, das beispielsweise nicht größer als zwei Stunden gewählt ist. Dies stellt sicher, dass einzelne Abschnitte 175, 180, 185, 190 die Zentralrecheneinrichtung 110 über das erste Ähnlichkeitsmaß im Weiteren erkannt werden können.

Ferner ist von Vorteil, dass das erste Ähnlichkeitsmaß als lokale Randbedingung nur jeweils eine Zuordnung zwischen zwei Punkten der ersten Lastkennlinie und dem vordefinierten Lastprofil aufweist. So wird vermieden, dass beispielsweise einem Punkt, beispielsweise dem lokalen Maximum 191 der ersten Lastkennlinie 160, zwei oder mehr Punkte auf dem vordefinierten Lastprofil zugeordnet werden.

Das erste Ähnlichkeitsmaß ermittelt die Zentralrecheneinrichtung 110 für das gesamte erste Zeitintervall. Dies kann entweder parametrisch erfolgen oder dadurch, dass die Zentralrecheneinrichtung 110 in vordefinierten Zeitschritten die parametrisierte erste Lastkennlinie 160 löst. In diesem Fall weist das erste Ähnlichkeitsmaß einen Satz zeitbezogener minimaler Abstände zu dem vordefinierten Lastprofil auf.

Das erste Ähnlichkeitsmaß für die erste Klimatisierungseinrichtung 20 wird im ersten Lastkennliniensatz zugeordnet zur ersten Lastkennlinie 160 abgelegt.

Für alle weiteren im Lastkennliniensatz, z.B. die zweite und die dritte Lastkennlinie 165, 170, abgelegten Lastkennlinien 165, 170 ermittelt die Zentralrecheneinrichtung 110 jeweils ein weiteres Ähnlichkeitsmaß, z.B. für die zweite Lastkennlinie 165 ein zweites Ähnlichkeitsmaß, zwischen der jeweils im ersten Lastkennliniensatz abgelegten Lastkennlinie 165, 170 und der vordefinierten Lastkennlinie. Auch die weiteren ersten Ähnlichkeitsmaße werden im ersten Lastkennliniensatz zugeordnet zur jeweiligen Lastkennlinie 165, 170 abgelegt.

In einem zehnten Verfahrensschritt 245 vergleicht die Zentralrecheneinrichtung 110 die ermittelten ersten Ähnlichkeitsmaße mit dem vordefinierten ersten Schwellenwert. Beispielsweise vergleicht die Zentralrecheneinrichtung 110 das erste Ähnlichkeitsmaß für die erste Lastkennlinie 160 mit dem vordefinierten ersten Schwellenwert.

In einem elften Verfahrensschritt 250 ermittelt die Zentralrecheneinrichtung 110 denjenigen Bereich der im ersten Lastkennliniensatz abgelegten Lastkennlinie 160, 165, 170, in denen das erste Ähnlichkeitsmaß zwischen der jeweiligen Lastkennlinie 160, 165, 170 und dem vordefinierten Lastprofil geringer ist als der vordefinierte erste Schwellenwert.

Dabei bedeutet das Unterschreiten des ersten Schwellenwerts durch das (erste) Ähnlichkeitsmaß, dass wenigstens in einem Bereich die Lastkennlinie 160, 165, 170 eine Ähnlichkeit zu dem vordefinierten Lastprofil oder eine Überlappung zwischen der Lastkennlinie 160, 165, 170 und der vordefinierten Lastkennlinie aufweist.

So ermittelt die Zentralrecheneinrichtung 110 beispielsweise für die erste Lastkennlinie 160 als ersten Bereich den ersten und zweiten Abschnitt 175, 180 der ersten Lastkennlinie 160, in denen das erste Ähnlichkeitsmaß geringer ist als der vordefinierte erste Schwellenwert. Ferner ermittelt die Zentralrecheneinrichtung 110 als zweiten Bereich den dritten und vierten Abschnitt 185, 190 der zweiten Lastkennlinie 165, in denen das zweite Ähnlichkeitsmaß geringer ist als der erste Schwellenwert.

In einem zwölften Verfahrensschritt 255 ermittelt die Zentralrecheneinrichtung 110 auf Grundlage der ermittelten ähnlichen Bereiche der Lastkennlinien 160, 165, 170 ein erstes Lastprofil für die erste Klimatisierungseinrichtung.

Figur 6 zeigt ein Diagramm beispielhaft der ersten Lastkennlinie 160, der zweiten Lastkennlinie 165 und eines ermittelten ersten Lastprofils 195. Dabei sind die Lastkennlinien 160, 165 und das ermittelte erste Lastprofil 195 aus Übersichtlichkeitsgründen übereinander dargestellt.

Vorzugsweise werden diejenigen Bereiche der Lastkennlinien 160, 165, 170 in denen das Ähnlichkeitsmaß kleiner ist als der vordefinierte erste Schwellenwert zeitsynchronisiert. So wird beispielsweise der erste Abschnitt 175 zeitsynchronisiert zum dritten Abschnitt 185 und der zweite Abschnitt 180 zeitsynchronisiert zum vierten Abschnitt 185. Dies kann mittels des DTW-Algorithmus erfolgen.

Nach der Zeitsynchronisierung werden die ähnlichen Bereiche gemittelt. Die Mittelwertbildung kann beispielsweise ein arithmetisches Mittel zwischen dem ersten und zweiten Bereich sein. Durch die Mittelwertbildung wird das erste Lastprofil 195 ermittelt wird.

In einem dreizehnten Verfahrensschritt 260 ermittelt die Zentralrecheneinrichtung 110 eine erste Abweichung zwischen dem vordefinierten Lastprofil und dem ermittelten ersten Lastprofil 195. Die erste Abweichung kann beispielsweise durch Differenzbildung über das vordefinierte Lastprofil und das ermittelte erste Lastprofil 195 ermittelt werden. Ferner ersetzt die Zentralrecheneinrichtung 110 das im Zentralspeicher 115 abgelegte vordefinierte Lastprofil durch das ermittelte erste Lastprofil 195. Des Weiteren vergleicht die Zentralrecheneinrichtung 110 die ermittelte erste Abweichung mit dem vordefinierten zweiten Schwellenwert. Überschreitet die erste Abweichung den zweiten Schwellenwert, so wiederholt die Zentralrecheneinrichtung 110 den achten bis dreizehnten Verfahrensschritte 235 - 260 für die weiteren Lastprofile.

Unterschreitet die erste Abweichung den zweiten Schwellenwert, so legt die Zentralrecheneinrichtung 110 in einem vierzehnten Verfahrensschritt 265 das ermittelte erste Lastprofil 195 in einem Lastprofilsatz zugeordnet zur ersten Klimatisierungseinrichtung 20 ab.

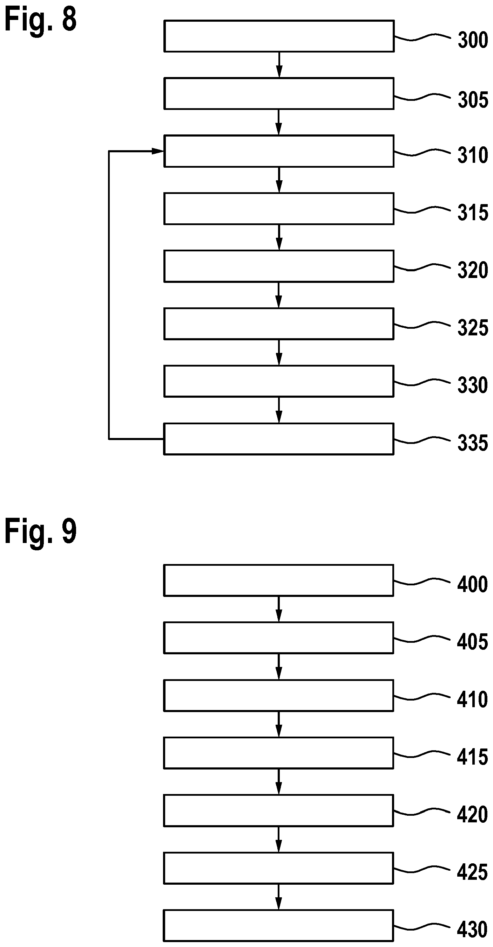

In einem fünfzehnten Verfahrensschritt 270 überprüft die Zentralrecheneinrichtung 110, ob für jeden im Zentralspeicher 115 abgelegten Datensatz jeder Klimatisierungseinrichtung 20, 30, 40 jeweils ein der Klimatisierungseinrichtung 20, 30, 40 zugeordnetes Lastprofil im Lastprofilsatz abgelegt ist. Ist dies nicht der Fall werden der erste bis vierzehnte Verfahrensschritt 200 - 265 wiederholt bis für jeden im Zentralspeicher 115 abgelegten Datensatz jeweils ein der Klimatisierungseinrichtung 20, 30, 40 zugeordnetes Lastprofil im Lastprofilsatz abgelegt ist. Danach fährt die Zentralrecheneinrichtung 110 mit dem in Figur 8 beschriebenen Gruppierungsverfahren fort.

Es wird darauf hingewiesen, dass der Zeitraum, über den der Leistungsparameter der jeweiligen Klimatisierungsvorrichtung 50, 60, 70 durch das jeweilige Steuergerät 55, 65, 75 erfasst wird, unterschiedlich sein kann. Dabei ist von Vorteil, wenn jedoch der Zeitraum 141, über den der Leistungsparameter der jeweiligen Klimatisierungsvorrichtung 50, 60, 70 erfasst wird, zumindest Überschneidungen aufweist. So kann beispielsweise der Zeitraum 141, mit dem das erste Steuergerät 55 den Leistungsparameter der ersten Klimatisierungsvorrichtung 50 aufzeichnet, 90 Tage betragen, während hingegen der Zeitraum 141, mit dem das zweite Steuergerät 65 den Leistungsparameter der zweiten Klimatisierungsvorrichtung 60 aufzeichnet, 85 Tage beträgt.

Auch können der oben beschrieben erste bis dreizehnte Verfahrensschritte 200 - 260 auch durch das Steuergerät 55, 65, 75 des jeweiligen Klimatisierungseinrichtung 20, 30, 40 ermittelt werden. Dabei wird auf den dritten Verfahrensschritt 215 verzichtet und stattdessen zusätzlich das ermittelte Lastprofil 195 im vierzehnten Verfahrensschritt 265 von dem Steuergerät 55, 65, 75 an den Zentralrechner 15 übertragen.

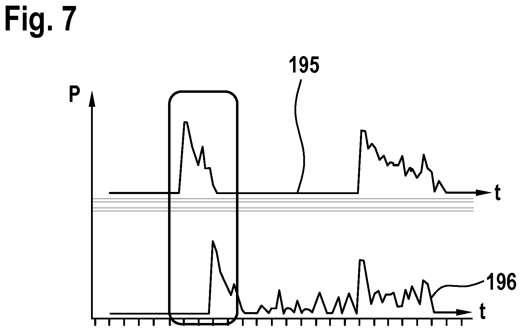

Figur 7 zeigt ein Diagramm des ersten werktäglichen Lastprofils 195 und eines ersten wochenendlichen Lastprofils 196 der ersten Klimatisierungseinrichtung 20.

In einer Variante des in Figur 2 beschrieben Verfahrens werden zur Ermittlung des ersten werktäglichen Lastprofils 195 der ersten Klimatisierungseinrichtung 20 im siebten Verfahrensschritt 230 ausschließlich Lastkennlinien aus Zeitintervallen, die eine zeitliche Zuordnung zu einem Werktag aufweisen berücksichtigt. Zur Ermittlung des ersten wochenendlichen Lastprofils 196 der ersten Klimatisierungseinrichtung 20 werden im siebten Verfahrensschritt 230 ausschließlich Lastkennlinien aus Zeitintervallen, die eine zeitliche Zuordnung zu einem Wochenende und/oder Feiertag aufweisen berücksichtigt. Auf Grund der Berücksichtung von Wochenende und Werktag kann das ermittelte Lastprofil 195, 196 besonders genau das Nutzerverhalten an Werktagen und am Wochenende widerspiegeln.

Figur 8 zeigt ein Ablaufdiagramm eines Gruppierungsverfahrens der Klimatisierungseinrichtungen 20, 30, 40 des in Figur 1 gezeigten Systems 10.

Im Zentralspeicher 115 liegt nach dem in Figur 2 beschrieben Verfahren für jeden Datensatz jeder Klimatisierungseinrichtung 20, 30, 40 jeweils ein zugeordnetes ermitteltes Lastprofil 195 vor. Im Folgenden werden die jeweiligen Klimatisierungseinrichtungen 20, 30, 40 in Abhängigkeit ihres in Figur 2 beschrieben ermittelten Lastprofils 195 gruppiert.

Dazu wird in einem ersten Gruppierungsschritt 300 ein drittes Ähnlichkeitsmaß zwischen dem ersten Lastprofil 195 der ersten Klimatisierungseinrichtung 20 und beispielsweise einem im Lastprofilsatz abgelegten zweiten Lastprofil der zweiten Klimatisierungseinrichtung 30 ermittelt. Ferner werden weitere dritte Ähnlichkeitsmaße zwischen dem ersten Lastprofil 195 und den weiteren Lastprofilen ermittelt. Das dritte Ähnlichkeitsmaß kann wie das erste und zweite Ähnlichkeitsmaß auf Grundlage des Dynamic-Time-Warping-Algorithmus ermittelt werden. Auch kann zusätzlich oder alternativ ein k-Means-Algorithmus im Rahmen des Gruppierungsverfahrens verwendet werden, um die Lastprofile zu gruppieren. Selbstverständlich sind auch andere selbstständig lernende Algorithmen denkbar.

In einem zweiten Gruppierungsschritt 305 vergleicht die Zentralrecheneinrichtung 110 das dritte Ähnlichkeitsmaß, beispielsweise zwischen dem ersten Lastprofil 195 und dem zweiten Lastprofil, mit dem vordefinierten ersten Gruppenschwellenwert. Unterschreitet das dritte Ähnlichkeitsmaß den vordefinierten ersten Gruppenschwellenwert, so ordnet die Zentralrecheneinrichtung 110 das erste Lastprofil und das zweite Lastprofil der zweiten Klimatisierungseinrichtung 30 einer gemeinsamen Nutzergruppe zu. Überschreitet das dritte Ähnlichkeitsmaß den ersten Gruppenschwellenwert, so ordnet die Zentralrecheneinrichtung 110 das erste Lastprofil einer ersten Nutzergruppe und das zweite Lastprofil einer zweiten Nutzergruppe zu. Eine Anzahl von Nutzergruppen ist beispielhaft nicht vorgegeben, so dass in Abhängigkeit des ersten Gruppenschwellenwerts im Laufe des Gruppierungsverfahrens sich die Anzahl der Nutzergruppen selbst einstellt. Auch ist denkbar, dass die Anzahl der Nutzgruppen im zweiten Gruppierungsschritt einmalig für die ermittelte Anzahl von Lastprofilen vordefiniert wird. Dies kann beispielsweise mit im Rahmen einer allgemein als "Elbow oft he mean squere curve" Berechung erfolgen.

Die Zentralrecheneinrichtung 110 führt den zweiten Gruppierungsschritt 305 so oft durch, bis alle mittels des in Figur 2 erläuterten Verfahrens ermittelten Lastprofile 195 der jeweiligen Klimatisierungseinrichtungen 20, 30, 40 einer Nutzergruppe zugeordnet sind.

Im Folgenden wird für jede Nutzergruppe ein Gruppenlastprofil durch die Zentralrecheneinrichtung 110 ermittelt. Dies soll beispielhaft anhand der der ersten Nutzergruppe zugeordneten Lastprofile, beispielsweise dem ersten und zweiten Lastprofil 195, erfolgen.

In einem dritten Gruppierungsschritt 310, der ähnlich dem in Figur 2 beschriebenen achten Verfahrensschritt 235 ist, wählt die Zentralrecheneinrichtung 110 aus den Lastprofilen der ersten Nutzergruppe ein Lastprofil als vordefiniertes Gruppenlastprofil aus.

In einem vierten Gruppierungsschritt 315, der ähnlich dem in Figur 2 beschriebenen neunten Verfahrensschritt 240 ist, ermittelt die Zentralrecheneinrichtung 110 ein erstes Gruppenähnlichkeitsmaß zwischen dem ersten Lastprofil und dem vordefinierten Lastprofil.

Für alle weiteren der Nutzergruppe zugeordneten Lastprofile ermittelt die Zentralrecheneinrichtung 110 jeweils ein weiteres Gruppenähnlichkeitsmaß, z.B. für das zweite Lastprofil ein zweites Gruppenähnlichkeitsmaß, zwischen der jeweils der ersten Nutzergruppe zugeordneten Lastprofilen und dem vordefinierten Gruppenlastprofil. Das Gruppenähnlichkeitsmaß kann mittels des DTW-Algorithmus ermittelt werden.

In einem fünften Gruppierungsschritt 320, der ähnlich dem in Figur 2 beschriebenen zehnten Verfahrensschritt 245 ist, vergleicht die Zentralrecheneinrichtung 110 die ermittelten Gruppenähnlichkeitsmaße mit dem vordefinierten zweiten Gruppenschwellenwert.

In einem sechsten Gruppierungsschritt 325, der ähnlich dem in Figur 2 beschriebenen elften Verfahrensschritt 250 ist, ermittelt die Zentralrecheneinrichtung 110 diejenigen Bereiche der in der ersten Nutzgruppe abgelegten Lastprofile, in denen das Gruppenähnlichkeitsmaß zwischen dem jeweiligen Lastprofil und dem vordefinierten Lastprofil geringer ist als der vordefinierte zweite Gruppenschwellenwert. Beispielsweise wird das erste Gruppenähnlichkeitsmaß mit dem zweiten Gruppenschwellenwert verglichen.

In einem siebten Gruppierungsschritt 330, der ähnlich dem in Figur 2 beschriebenen zwölften Verfahrensschritt 255 ist, ermittelt die Zentralrecheneinrichtung 110 auf Grundlage der ermittelten ähnlichen Bereiche der Lastprofile ein erstes Gruppenlastprofil für die erste Nutzergruppe.

Dabei werden vorzugsweise diejenigen Bereiche in denen das erste Gruppenähnlichkeitsmaß kleiner ist als der vordefinierte zweite Gruppenschwellenwert zeitsynchronisiert. Dies kann mittels des DTW-Algorithmus erfolgen.

Nach der Zeitsynchronisierung werden die ähnlichen Bereiche gemittelt. Die Mittelwertbildung kann beispielsweise ein arithmetisches Mittel zwischen den Bereichen jeweils sein.

In einem achten Gruppierungsschritt 335, der ähnlich dem in Figur 2 beschriebenen 13. Verfahrensschritt 260 ist, ermittelt die Zentralrecheneinrichtung 110 eine zweite Abweichung zwischen dem vordefinierten Gruppenlastprofil und dem ermittelten ersten Gruppenlastprofil. Die zweite Abweichung kann beispielsweise durch Differenzbildung über das vordefinierte Gruppenlastprofil und das ermittelte erste Gruppenlastprofil ermittelt werden. Ferner ersetzt die Zentralrecheneinrichtung 110 das im Zentralspeicher 115 abgelegte vordefinierte Gruppenlastprofil durch das ermittelte erste Gruppenlastprofil. Des Weiteren vergleicht die Zentralrecheneinrichtung 110 die ermittelte zweite Abweichung mit dem vordefinierten dritten Schwellenwert. Überschreitet die zweite Abweichung den dritten Schwellenwert, so wiederholt die Zentralrecheneinrichtung 110 den dritten bis achten Gruppierungsschritte 310 -335 für die weiteren der ersten Nutzergruppe zugeordneten Lastprofile.

Unterschreitet die zweite Abweichung den dritten Schwellenwert, so legt die Zentralrecheneinrichtung 110 in einem neunten Gruppierungsschritt 340 das ermittelte erste Gruppenlastprofil 195 für die erste Nutzergruppe fest.

Die Zentralrecheneinrichtung 110 fährt so lange mit der Mittelung des Gruppenlastprofils fort, bis entweder sämtliche zu der Nutzergruppe zugeordneten Lastprofile für die Ermittlung des Gruppenlastprofils verwendet sind oder keine oder nur eine geringe Änderung zwischen dem ermittelten ersten Gruppenlastprofil und dem vordefinierten Gruppenlastprofil vorliegt.

Die Zentralrecheneinrichtung 110 wiederholt die dritten bis achten Gruppierungsschritte 310 - 335 für die weiteren Nutzergruppen, bis aus allen den Nutzergruppen jeweils zugeordneten Lastprofilen jeweils für die Nutzergruppe ein Gruppenlastprofil ermittelt ist. Dabei sind vorzugsweise die Gruppenlastprofile jeder Nutzergruppe unterschiedlich und entsprechen einem unterschiedlichen Nutzerverhalten.

Figur 9 zeigt ein Ablaufdiagramm eines Verfahrens zur Steuerung der Klimatisierungsanlagen 20, 30, 40 des Systems 10.

In einem ersten Steuerschritt 400 vergleicht die Zentralrecheneinrichtung 110 jeweils das ermittelte Lastprofil der jeweils entsprechenden Klimatisierungseinrichtung 20, 30, 40 mit dem für die Nutzergruppe zugeordneten Gruppenlastprofil.

Auf Grundlage des im ersten Steuerschritt 400 durchgeführten Vergleichs ermittelt die Zentralrecheneinrichtung 110 ein Steuersignal. Das Steuersignal stellt die Zentralrecheneinrichtung 110 über die dritte Verbindung 120 an die Zentralschnittstelle 105 bereit. Mittels der Zentralschnittstelle 105 wird das Steuersignal über die fünfte Verbindung 130 an die Steuergerätschnittstelle 80 des ersten Steuergeräts 55 bereitgestellt. Das Steuersignal wird über die zweite Verbindung 100 an die Steuereinrichtung 85 des ersten Steuergeräts 55 übertragen. Auf Grundlage des Steuersignals adaptiert die Steuereinrichtung 85 des ersten Steuergeräts 55 beispielsweise eine Steuerkennlinie, die im Steuerspeicher 90 des ersten Steuergeräts 55 abgelegt ist. Aufgrund der adaptierten Steuerkennlinie steuert die Steuereinrichtung 85 die erste Klimatisierungsvorrichtung 50.

So kann beispielsweise durch den Vergleich des ersten Lastprofils der ersten Klimatisierungseinrichtung 20 mit dem ersten Gruppenlastprofil erfasst werden, dass eine Vorlauftemperatur der ersten Klimatisierungsvorrichtung 50 höher ist als innerhalb der ersten Nutzergruppe. Mittels des Steuersignals kann die Steuerkennlinie dahingehend adaptiert werden, dass die Vorlauftemperatur der ersten Klimatisierungsvorrichtung 50 reduziert wird. Dadurch kann auf einfache Weise die erste Klimatisierungseinrichtung 20 energieeffizienter betrieben werden.

Zusätzlich oder alternativ zum ersten Steuerschritt 400 können auch weitere Steuerschritte durchgeführt werden.

In einem zweiten Steuerschritt 405 erfasst wenigstens eines der Steuergeräte 55, 65, 75 den Leistungsparameter für ein viertes Zeitintervall, das in seiner Länge dem ersten und/oder zweiten Zeitintervall 145, 150, 155 entspricht.

Der erfasste Leistungsparameter wird in einem dritten Steuerschritt 410 in einem Kurzzeitdatensatz abgelegt.

In einem vierten Steuerschritt 415 wird der Kurzzeitdatensatz über die erste Verbindung 130 an den Zentralrechner 15 übertragen.

In einen fünften Steuerschritt 420 ermittelt die Zentralrecheneinrichtung 110 für das vierte Zeitintervall eine vierte Lastkennlinie analog dem achten Verfahrensschritt 235.

In einem sechsten Steuerschritt 425 vergleicht die Zentralrecheneinrichtung 110 die ermittelte vierte Lastkennlinie mit dem Gruppenlastprofil, derjenigen Nutzergruppe, zu der die Klimatisierungseinrichtung 20, 30, 40 in den Gruppierungsschritten 300 - 335 zugeordnet worden ist. Beispielsweise wird für die erste Klimatisierungseinrichtung 20 die vierte Lastkennlinie ermittelt und durch die Zuordnung der ersten Klimatisierungseinrichtung 20 zu der ersten Nutzergruppe mit dem ersten Gruppenlastprofil verglichen.

In Abhängigkeit des Ergebnisses des Vergleichs stellt die Zentralrecheneinrichtung 110 ein weiteres Steuersignal bereit. Das weitere Steuersignal an das erste Steuergerät 55 übertragen. In Abhängigkeit des weiteren Steuersignals steuert die Steuereinrichtung 85 die erste Klimatisierungsvorrichtung 50. So kann auch beispielsweise kurzfristig ein erfasstes Ereignis, beispielsweise ein Brennerausfall oder eine fehlerhafte, erhöhte Vorlauftemperatur, schnell korrigiert werden, ohne dass hierbei durch das Ereignis beispielsweise durch einen erhöhten Energieaufwand dies durch den Nutzer bemerkt wird.

Alternativ kann selbstverständlich auch im vierten Steuerschritt 415 für einen längeren Zeitraum der Leistungsparameter erfasst werden. Analog der zweiten bis vierzehnten Verfahrensschritte 205 bis 265 wird dann ein neues Lastprofil ermittelt. Das neue Lastprofil wird jedoch nicht zur Eingruppierung gemäß Gruppierungsschritte 300 - 335 genutzt, sondern im fünften Steuerschritt 420 mit dem bereits ermittelten und der Nutzergruppe zugeordneten Gruppenlastprofil in der die erste Klimatisierungseinrichtung 20 eingestuft ist, verglichen. In Abhängigkeit des Ergebnisses des Vergleichs im fünften Steuerschritt stellt die Zentralrecheneinrichtung 110 ein weiteres Steuersignal bereit, das durch das erste Steuergerät 55 erfasst wird und auf dessen Grundlage das erste Steuergerät 55 die erste Klimatisierungsvorrichtung 50 steuert.

Ferner kann in einem siebten Steuerschritt 430 das Gruppenlastprofil mit einem vordefiniertem in Zentralspeicher 115 abgelegten Normallastprofil verglichen werden.

In einem achten Steuerschritt 435 ermittelt die Zentralrecheneinrichtung 110 bei Abweichung des Gruppenlastprofils um einen vordefinierten und im Zentralspeicher 115 abgelegten Abweichungsschwellenwert ein weiteres Steuersignal, auf dessen Grundlage die Steuergeräte 55, 65, 75 die der Klimatisierungsvorrichtung 50, 60, 70 die der Nutzergruppe angehören steuern.

Weist beispielsweise das erste Gruppenlastprofil eine Abweichung größer dem Abweichungsschellenwert von Normallastprofil auf, z.B. in dem das erste Gruppenlastprofil eine nächtliche Last aufweist, so kann beispielsweise mit dem weiteren Steuersignal eine Nachtabschaltung für die Steuergeräte 55, 65, 75 der Nutzergruppe eingestellt werden.

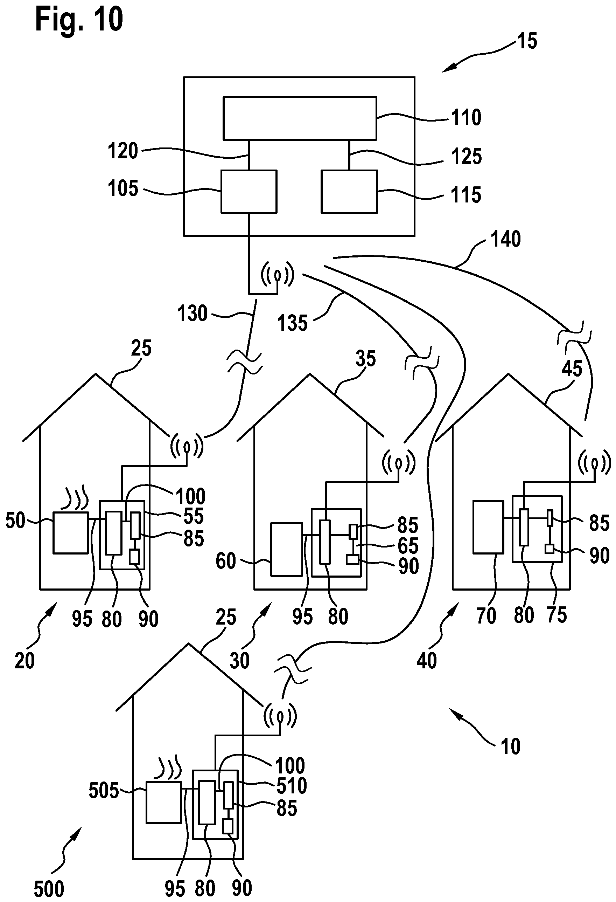

Figur 10 zeigt eine Weiterbildung des in den Figuren 1 bis 8 beschriebenen Systems 10.

Das System 10 ist ähnlich zu dem in Figur 1 gezeigten System 10 ausgebildet. Abweichend dazu soll im Folgenden ein neu zu installierende Klimatisierungseinrichtung 500 in das System 10 integriert werden. Die neu zu installierende Klimatisierungseinrichtung 500 ist beispielhaft ähnlich zur ersten Klimatisierungseinrichtung 20 ausgebildet und umfasst eine weitere Klimatisierungsvorrichtung 505 und ein weiteres Steuergerät 510.

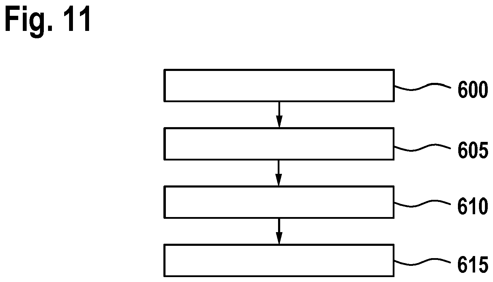

Figur 11 zeigt ein Ablaufdiagramm eines Verfahrens zur Eingruppierung der neu zu installierenden Klimatisierungseinrichtung 500 in das System 10.

Dabei wird in einem ersten Neugruppierungsschritt 600 eine Datenverbindung zwischen der neu zu installierende Klimatisierungseinrichtung 500 und dem Zentralrechner 15 hergestellt.

In einem zweiten Neugruppierungsschritt 605 werden der erste bis vierzehnte Verfahrensschritt 200 - 270 für die neu zu installierende Klimatisierungseinrichtung 500 wiederholt. Dabei kann der aufgezeichnete Zeitraum auf wenige Tage reduziert sein.

In einem dritten Neugruppierungsschritt 610 ermittelt die Zentralrecheneinrichtung 110 mittels des Dynamic-Time-Warping-Algorithmus zwischen einem im zweiten Neugruppierungsschritt 605 ermittelten Lastprofils der neu zu installierenden Klimatisierungseinrichtung 500 und den Gruppenlastprofilen ein viertes Ähnlichkeitsmaß.

In einem vierten Neugruppierungsschritt 615 ordnet die Zentralrecheneinrichtung 110 die neu zu installierende Klimatisierungseinrichtung 500 derjenigen Nutzergruppe zu, bei der das vierte Ähnlichkeitsmaß am geringsten ist. Dadurch kann schnell die neu zu installierende Klimatisierungseinrichtung 500 zugeordnet und entsprechende Steuersignale in Abhängigkeit ihres Lastprofils ermittelt werden.

Auch kann die Zentralrecheneinrichtung 110 der neu zu installierenden Klimatisierungseinrichtung 500 eine Information über die bestehenden Nutzergruppen mittels eines Informationssignals bereitstellen. Auch können die Neugruppierungsschritte 600 - 615 durch das weitere Steuergerät 510 der neu zu installierenden Klimatisierungseinrichtung 500 vorgenommen werden, so dass das weitere Steuergerät 510 der neu zu installierenden Klimatisierungseinrichtung sich selbst in die entsprechende Nutzergruppe einstuft, in dem die Neugruppierungsschritte 600 - 615 durch das weitere Steuergerät 510 ausgeführt werden. Die Neugruppierung kann täglich oder nach einem längeren Zeitraum erfolgen.

Zusätzlich kann das durch die Zentralrecheneinrichtung 110 bereitgestellte Steuersignal dazu genutzt werden, den Nutzer darauf hinzuweisen, welche möglichen Schritte der Nutzer einleiten kann, um eine energieeffizientere Nutzung der Klimatisierungseinrichtung 20, 30, 40 herbeizuführen. Auch kann der Nutzer darauf hingewiesen werden, dass der Nutzer in einem Vergleich zu den anderen Nutzern in seiner Nutzergruppe ein besonders energieeffizientes Verhalten hat oder einen höheren Energieaufwand hat. Auch kann beispielsweise durch die Zentralrecheneinrichtung 110 mittels Steuersignal dem Nutzer vorgeschlagen werden, wie er im Vergleich zu anderen Nutzern seiner Nutzergruppe diesen Energieaufwand reduzieren kann.

Ferner kann selbstverständlich zusätzlich oder alternativ mittels dem ermittelten Steuersignal das Steuerverfahren, der Steueralgorithmus und/oder eine Steuerkennlinie im Steuerspeicher 90 automatisch oder halbautomatisch oder auf Rückfrage vom Nutzer geändert werden.

Ferner wird darauf hingewiesen, dass selbstverständlich zusätzliche Verfahrensschritte, Gruppierungsschritte und/oder Neugruppierungsschritte zu den oben beschriebenen Verfahrensschritte, Gruppierungsschritte und/oder Neugruppierungsschritte vorgesehen sein können.

Auch können die beschrieben zusätzliche Verfahrensschritte, Gruppierungsschritte und/oder Neugruppierungsschritte in regelmäßigen Zeitabständen wiederholt werden und/oder wenn jeweils eine neu zu installierende Klimatisierungseinrichtung 500 in das System 10 integriert werden soll.

## Patentansprüche

1. Verfahren,
- wobei in einem ersten Verfahrensschritt (200, 205, 225) für ein erstes Zeitintervall (145, 150, 155) wenigstens ein Wert eines Leistungsparameters (P) einer Klimatisierungseinrichtung (20, 30, 40) des Systems (10) ermittelt wird,
- wobei in einem zweiten Verfahrensschritt (230) für das erste Zeitintervall (145, 150, 155) eine zeitabhängige erste Lastkennlinie (160) ermittelt wird,
- wobei in einem dritten Verfahrensschritt (240) ein erstes Ähnlichkeitsmaß zumindest abschnittsweise der ersten Lastkennlinie (160) mit einem vordefinierten Lastprofil ermittelt wird,
- wobei in einem vierten Verfahrensschritt (245) das ermittelte erste Ähnlichkeitsmaß mit einem vordefinierten Schwellenwert verglichen wird,
- wobei in einem fünften Verfahrensschritt (250) ein erster Bereich, in dem das erste Ähnlichkeitsmaß geringer ist als der vordefinierte Schwellenwert ermittelt wird,
- wobei in einem sechsten Verfahrensschritt (255) auf Grundlage des ersten Bereichs ein erstes Lastprofil (195) ermittelt wird
- wobei auf Grundlage des ersten Lastprofils (195) ein Steuersignal zur Steuerung der Klimatisierungseinrichtung (20, 30, 40) ermittelt wird.

2. Verfahren nach Anspruch 1,
- wobei im ersten Verfahrensschritt (200, 205, 225) ein Wert des Leistungsparameters der Klimatisierungseinrichtung (20, 30, 40) in einem zweiten Zeitintervall (150) ermittelt wird,
- wobei im zweiten Verfahrensschritt (230) für das zweite Zeitintervall eine zweite zeitabhängige Lastkennlinie (165) ermittelt wird,
- wobei im dritten Verfahrensschritt (215) ein zweites Ähnlichkeitsmaß zumindest abschnittsweise der zweiten Lastkennlinie (165) mit dem vordefinierten Lastprofil ermittelt wird,
- wobei in einem vierten Verfahrensschritt (220) das ermittelte zweite Ähnlichkeitsmaß mit dem vordefinierten Schwellenwert verglichen wird,
- wobei in einem fünften Verfahrensschritt (225) ein zweiter Bereich, in dem das zweite Ähnlichkeitsmaß geringer ist als der vordefinierte Schwellenwert, ermittelt wird,
- wobei das erste Lastprofil (195) auf Grundlage einer Mittelung des ersten Bereichs und dem zweiten Bereich ermittelt wird.

3. Verfahren nach Anspruch 2, wobei als vordefiniertes Lastprofil die zweite Lastkennlinie (165) gewählt wird.

4. Verfahren nach einem der Ansprüche 1 bis 3, wobei in einem achten Verfahrensschritt (235) das vordefinierte Lastprofil durch das ermittelte erste Lastprofil (195) ersetzt wird.

5. Verfahren nach einem der Ansprüche 1 bis 4,
- wobei in einem achten Verfahrensschritt (240) zusätzlich eine Abweichung zwischen dem vordefinierten Lastprofil und dem ermittelten ersten Lastprofil ermittelt wird,
- wobei die Abweichung mit einem vordefinierten weiteren Schwellenwert verglichen wird,
- wobei bei Überschreiten des weiteren Schwellenwerts der dritte bis siebte Verfahrensschritt (240, 245, 250, 255) wiederholt werden.

6. Verfahren nach einem der Ansprüche 1 bis 5,
- wobei für eine weitere Klimatisierungseinrichtung (30, 40) ein zweites Lastprofil ermittelt wird,
- wobei ein drittes Ähnlichkeitsmaß zumindest abschnittsweise zwischen dem ersten Lastprofil (195) und dem zweiten Lastprofil ermittelt wird,
- wobei das dritte Ähnlichkeitsmaß mit einem vordefinierten Gruppenschwellenwert in einem Vergleich verglichen wird,
- wobei in Abhängigkeit eines Ergebnisses des Vergleichs die zum ersten Lastprofil zugeordnete Klimatisierungseinrichtung (20) und die zum zweiten Lastprofil zugeordnete Klimatisierungseinrichtung (30, 40) einer gemeinsamen Nutzergruppe oder unterschiedlichen Nutzergruppen zugeordnet werden.

7. Verfahren nach Anspruch 6,
- wobei bei Unterschreiten des Gruppenschwellenwerts durch das dritte Ähnlichkeitsmaß ein dritter Bereich des ersten Lastprofils (195), in dem das dritte Ähnlichkeitsmaß geringer ist, und ein vierter Bereich des zweiten Lastprofils, in dem das dritte Ähnlichkeitsmaß geringer ist, ermittelt werden,
- auf Grundlage des dritten Bereichs und des vierten Bereichs ein zu einem Nutzerprofil zugeordnetes Gruppenlastprofil ermittelt wird.

8. Verfahren nach Anspruch 7,
- wobei das Gruppenlastprofil auf Grundlage einer Mittelung des dritten Bereichs und des vierten Bereichs ermittelt wird.

9. Verfahren nach Anspruch 6,
- wobei bei Überschreiten des Gruppenschwellenwerts durch das dritte Ähnlichkeitsmaß auf Grundlage des ersten Lastprofils (195) ein zu einer Nutzergruppe zugeordnetes Gruppenlastprofil ermittelt wird und auf Grundlage des zweiten Lastprofils ein zu einer weiteren Nutzergruppe zugeordnetes weiteres Gruppenlastprofil ermittelt wird.

10. Verfahren nach einem der 7 bis 9,
- wobei das erste Lastprofil (195) mit dem Gruppenlastprofil verglichen wird,
- wobei in Abhängigkeit eines Ergebnisses des Vergleichs das Steuersignal zur Steuerung einer Komponente der Klimatisierungseinrichtung (20, 30, 40) ermittelt wird.

11. Verfahren nach einem der Ansprüche 7 bis 10,
- wobei das Gruppenlastprofil mit einem vordefinierten Normallastprofil in einem Vergleich verglichen wird,
- wobei in Abhängigkeit des Ergebnisses des Vergleichs ein weiteres Steuersignal zur Steuerung der Klimatisierungseinrichtung (20, 30, 40) ermittelt wird.

12. Verfahren nach einem der Ansprüche 1 bis 11, wobei wenigstens eines der Ähnlichkeitsmaße mittels eines Dynamic-Time-Warping (DTW)-Algorithmus ermittelt wird.

13. Klimatisierungseinrichtung (20, 30, 40) mit einem Steuergerät (55, 65, 75) und einer Klimatisierungsvorrichtung (50, 60, 70),
- wobei das Steuergerät (55, 65, 75) ausgebildet ist, die Klimatisierungsvorrichtung (50, 60, 70) zu steuern,
- wobei das Steuergerät (55, 65, 75) weiter ausgebildet ist, das Verfahren gemäß einem der Ansprüche 1 bis 12 durchzuführen.

14. System (10)
- aufweisend einen Zentralrechner (15) und wenigstens eine Klimatisierungseinrichtung (20, 30, 40) mit einem Steuergerät (55, 65, 75) und einer Klimatisierungsvorrichtung (50, 60, 70),
- wobei der Zentralrechner (15) mit dem Steuergerät (55, 65, 75) verbunden ist,
- wobei das Steuergerät (55, 65, 75) und /oder der Zentralrechner (15) ausgebildet sind, das Verfahren gemäß einem der Ansprüche 1 bis 12 durchzuführen.

## Claims

1. Method,
- wherein at least one value of a performance parameter (P) of an air-conditioning device (20, 30, 40) of the system (10) is determined for a first interval of time (145, 150, 155) in a first method step (200, 205, 225),
- wherein a time-dependent first load characteristic curve (160) is determined for the first interval of time (145, 150, 155) in a second method step (230),
- wherein a first degree of similarity at least in sections of the first load characteristic curve (160) with a predefined load profile is determined in a third method step (240),
- wherein the determined first degree of similarity is compared with a predefined threshold value in a fourth method step (245),
- wherein a first area in which the first degree of similarity is lower than the predefined threshold value is determined in a fifth method step (250),
- wherein a first load profile (195) is determined on the basis of the first area in a sixth method step (255),
- wherein a control signal for controlling the air-conditioning device (20, 30, 40) is determined on the basis of the first load profile (195).

2. Method according to Claim 1,
- wherein a value of the performance parameter of the air-conditioning device (20, 30, 40) in a second interval of time (150) is determined in the first method step (200, 205, 225),
- wherein a second time-dependent load characteristic curve (165) is determined for the second interval of time in the second method step (230),
- wherein a second degree of similarity at least in sections of the second load characteristic curve (165) with the predefined load profile is determined in the third method step (215),
- wherein the determined second degree of similarity is compared with the predefined threshold value in a fourth method step (220),
- wherein a second area in which the second degree of similarity is lower than the predefined threshold value is determined in a fifth method step (225),
- wherein the first load profile (195) is determined on the basis of averaging the first and second areas.

3. Method according to Claim 2, wherein the second load characteristic curve (165) is selected as the predefined load profile.

4. Method according to one of Claims 1 to 3, wherein the predefined load profile is replaced with the determined first load profile (195) in an eighth method step (235).

5. Method according to one of Claims 1 to 4,
- wherein a difference between the predefined load profile and the determined first load profile is additionally determined in an eighth method step (240),
- wherein the difference is compared with a predefined further threshold value,
- wherein the third to seventh method steps (240, 245, 250, 255) are repeated if the further threshold value is exceeded.

6. Method according to one of Claims 1 to 5,
- wherein a second load profile is determined for a further air-conditioning device (30, 40),
- wherein a third degree of similarity at least in sections between the first load profile (195) and the second load profile is determined,
- wherein the third degree of similarity is compared with a predefined group threshold value in a comparison,
- wherein the air-conditioning device (20) assigned to the first load profile and the air-conditioning device (30, 40) assigned to the second load profile are assigned to a common user group or to different user groups depending on a result of the comparison.

7. Method according to Claim 6,
- wherein, if the group threshold value is undershot by the third degree of similarity, a third area of the first load profile (195), in which the third degree of similarity is lower, and a fourth area of the second load profile, in which the third degree of similarity is lower, are determined,
- a group load profile assigned to a user profile is determined on the basis of the third and fourth areas.

8. Method according to Claim 7,
- wherein the group load profile is determined on the basis of averaging the third and fourth areas.

9. Method according to Claim 6,
- wherein, if the group threshold value is exceeded by the third degree of similarity, a group load profile assigned to a user group is determined on the basis of the first load profile (195) and a further group load profile assigned to a further user group is determined on the basis of the second load profile.

10. Method according to one of 7 to 9,
- wherein the first load profile (195) is compared with the group load profile,
- wherein the control signal for controlling a component of the air-conditioning device (20, 30, 40) is determined on the basis of a result of the comparison.

11. Method according to one of Claims 7 to 10,
- wherein the group load profile is compared with a predefined normal load profile in a comparison,
- wherein a further control signal for controlling the air-conditioning device (20, 30, 40) is determined on the basis of the result of the comparison.

12. Method according to one of Claims 1 to 11, wherein at least one of the degrees of similarity is determined by means of a dynamic time warping (DTW) algorithm.

13. Air-conditioning device (20, 30, 40) having a control device (55, 65, 75) and an air-conditioning apparatus (50, 60, 70),
- wherein the control device (55, 65, 75) is designed to control the air-conditioning apparatus (50, 60, 70),
- wherein the control device (55, 65, 75) is also designed to carry out the method according to one of Claims 1 to 12.

14. System (10)
- having a central computer (15) and at least one air-conditioning device (20, 30, 40) having a control device (55, 65, 75) and an air-conditioning apparatus (50, 60, 70),
- wherein the central computer (15) is connected to the control device (55, 65, 75),
- wherein the control device (55, 65, 75) and/or the central computer (15) is/are designed to carry out the method according to one of Claims 1 to 12.

## Revendications

1. Procédé,
- au moins une valeur d'un paramètre de puissance (P) d'un équipement de climatisation (20, 30, 40) du système (10) étant déterminée dans une première étape de procédé (200, 205, 225) pour un premier intervalle de temps (145, 150, 155),
- une première courbe caractéristique de charge (160) dépendant du temps étant déterminée dans une deuxième étape de procédé (230) pour le premier intervalle de temps (145, 150, 155),
- une première mesure de similarité au moins par tronçons de la première courbe caractéristique de charge (160) avec un profil de charge prédéfini étant déterminée dans une troisième étape de procédé (240),
- la première mesure de similarité déterminée étant comparée à une valeur de seuil prédéfinie dans une quatrième étape de procédé (245),
- une première zone dans laquelle la première mesure de similarité est plus petite que la valeur de seuil prédéfinie étant déterminée dans une cinquième étape de procédé (250),
- un premier profil de charge (195) étant déterminé dans une sixième étape de procédé (255) sur la base de la première zone,
- un signal de commande destiné à la commande de l'équipement de climatisation (20, 30, 40) étant déterminé sur la base du premier profil de charge (195).

2. Procédé selon la revendication 1,
- une valeur du paramètre de puissance de l'équipement de climatisation (20, 30, 40) dans un deuxième intervalle de temps (150) étant déterminée dans la première étape de procédé (200, 205, 225),
- une deuxième courbe caractéristique de charge (165) dépendant du temps étant déterminée dans la deuxième étape de procédé (230) pour le deuxième intervalle de temps,
- une deuxième mesure de similarité au moins par tronçons de la deuxième courbe caractéristique de charge (165) avec le profil de charge prédéfini étant déterminée dans la troisième étape de procédé (215),
- la deuxième mesure de similarité déterminée étant comparée à la valeur de seuil prédéfinie dans une quatrième étape de procédé (220),
- une deuxième zone dans laquelle la deuxième mesure de similarité est plus petite que la valeur de seuil prédéfinie étant déterminée dans une cinquième étape de procédé (225),
- le premier profil de charge (195) étant déterminé sur la base d'une moyenne de la première zone et de la deuxième zone.

3. Procédé selon la revendication 2, la deuxième courbe caractéristique de charge (165) étant choisie en tant que profil de charge prédéfini.

4. Procédé selon l'une des revendications 1 à 3, le profil de charge prédéfini étant, dans une huitième étape de procédé (235), remplacé par le premier profil de charge (195) déterminé.

5. Procédé selon l'une des revendications 1 à 4,
- une divergence entre le profil de charge prédéfini et le premier profil de charge déterminé étant en plus déterminée dans une huitième étape de procédé (240),
- la divergence étant comparée à une autre valeur de seuil prédéfinie,
- les troisième à septième étapes de procédé (240, 245, 250, 255) étant répétées en cas de passage au-dessus de l'autre valeur de seuil.

6. Procédé selon l'une des revendications 1 à 5,
- un deuxième profil de charge étant déterminé pour un autre équipement de climatisation (30, 40),
- une troisième mesure de similarité étant déterminée au moins par tronçons entre le premier profil de charge (195) et le deuxième profil de charge,
- la troisième mesure de similarité étant, dans une comparaison, comparée à une valeur de seuil de groupe prédéfinie,
- l'équipement de climatisation (20) affecté au premier profil de charge et l'équipement de climatisation (30, 40) affecté au deuxième profil de charge étant, en fonction d'un résultat de la comparaison, affectés à un groupe d'utilisateurs commun ou à des groupes d'utilisateurs différents.

7. Procédé selon la revendication 6,
- une troisième zone du premier profil de charge (195) dans laquelle la troisième mesure de similarité est plus petite et une quatrième zone du deuxième profil de charge dans laquelle la troisième mesure de similarité est plus petite étant déterminées en cas de passage au-dessous de la valeur de seuil de groupe par la troisième mesure de similarité,
- un profil de charge de groupe affecté à un profil d'utilisateurs étant déterminé sur la base de la troisième zone et de la quatrième zone.

8. Procédé selon la revendication 7,
- le profil de charge de groupe étant déterminé sur la base d'une moyenne de la troisième zone et de la quatrième zone.

9. Procédé selon la revendication 6,
- un profil de charge de groupe affecté à un groupe d'utilisateurs étant déterminé en cas de passage au-dessus de la valeur de seuil de groupe par la troisième mesure de similarité sur la base du premier profil de charge (195), et un autre profil de charge de groupe affecté à un autre groupe d'utilisateurs étant déterminé sur la base du deuxième profil de charge.

10. Procédé selon l'une des 7 à 9,
- le premier profil de charge (195) étant comparé au profil de charge de groupe,
- le signal de commande étant, en fonction d'un résultat de la comparaison, déterminé pour la commande d'une composante de l'équipement de climatisation (20, 30, 40).

11. Procédé selon l'une des revendications 7 à 10,
- le profil de charge de groupe étant, dans une comparaison, comparé à un profil de charge normal prédéfini,
- un autre signal de commande étant, en fonction du résultat de la comparaison, déterminé pour la commande de l'équipement de climatisation (20, 30, 40).

12. Procédé selon l'une des revendications 1 à 11, au moins une des mesures de similarité étant déterminée au moyen d'un algorithme Dynamic-Time-Warping (DTW).

13. Equipement de climatisation (20, 30, 40) avec un appareil de commande (55, 65, 75) et un dispositif de climatisation (50, 60, 70),
- l'appareil de commande (55, 65, 75) étant constitué pour commander le dispositif de climatisation (50, 60, 70),
- l'appareil de commande (55, 65, 75) étant également constitué pour réaliser le procédé selon l'une des revendications 1 à 12.

14. Système (10),
- présentant un ordinateur central (15) et au moins un équipement de climatisation (20, 30, 40) avec un appareil de commande (55, 65, 75) et un dispositif de climatisation (50, 60, 70),
- l'ordinateur central (15) étant raccordé à l'appareil de commande (55, 65, 75),
- l'appareil de commande (55, 65, 75) et/ou l'ordinateur central (15) étant constitués pour réaliser le procédé selon l'une des revendications 1 à 12.
